Europäisches Patentamt

European Patent Office

Office européen des brevets

(11) Publication number : **0 479 496 A2**

## EUROPEAN PATENT APPLICATION

(21) Application number : **91308830.8**

(22) Date of filing : **27.09.91**

(51) Int. Cl.⁵ : **G06F 15/72**

(30) Priority : **28.09.90 US 590394**

(43) Date of publication of application :
**08.04.92 Bulletin 92/15**

(84) Designated Contracting States :
**DE FR GB**

(71) Applicant : **XEROX CORPORATION**
**Xerox Square**
**Rochester New York 14644 (US)**

(72) Inventor : **Cliu, Jack**
**20739 Wendy Drive**
**Torrance CA, 90503 (US)**

(74) Representative : **Hill, Cecilia Ann et al**
**Rank Xerox Patent Department Albion House,**
**55 New Oxford Street**
**London WC1A 1BS (GB)**

(54) **High speed graphic image generation using multiple steppers.**

(57)    A process is described for displaying a computer generated outline on a raster output scanner, and for filling a region defined by an outline. A computer terminal is used to generate an outline which is defined by a number of sequences of curve and line segments. After the initial conversion of all curves to approximating parabolic or line segments, all segments are converted to a data structure of initial coordinates and higher order differences. Then a plurality of steppers are used to step through the curves, a scan line at a time, to iteratively create the coordinates of the fill lines in each scan line.

FIG. 15A

EP 0 479 496 A2

This invention relates to the generation of graphic images.

In almost all of the Page description Languages (e.g., Postcript, Interpress...), there are two types of graphic objects, a Stroke defined by its centerline trajectory and the width of the stroke and a Filled Region defined by its outline.The first type can actually be converted to the second type and then be processed as the second type.The outline of each filled region is normally represented as a sequence of curves or line segments. A curve segment is generally represented as either a Conic curve, an Arc, or a Cubic Bezier Spline. The major task of the printer processing unit is to first convert those segments into some more manageable intermediate format and then to fill the region bounded by those segments. Two of the typical approaches that exist today are as follows.

(1) First break each curved segment of the outline into many line segments. The second step is to break the region (which is now bounded by the newly converted outline defined purely by line segments) into collections of trapezoids or scanlines. The third step is then to fill the trapezoids or draw the scanlines by either software implementation or dedicated hardware. This approach has a performance problem mainly due to the slow speed of the curve breaking process which normally requires many iterations of floating point operations.

(2) Draw the outline one pixel at a time and then fill the region which was bounded by those pixels. This approach has two problems: The first problem is that it is hard to determine the inside from the outside of the outlined region. The second problem is that to draw pixels one by one is very time consuming.

This invention comprises decomposing the imaging of graphic objects in 3 steps. The first step is to break each curved segment into parabolic and line segments. The second step is to convert the outline (now consisting of only parabolic segments and line segments) into a tree-like intermediate data structure called an MS-tree (Multiple stepper tree) with each node within the tree defining either a parabolic segment or a line segment. The third step is to traverse the MS-tree by "stepping" each node (implemented as a difference engine) one scanline at a time to fill the whole region There are at least five advantages of taking this approach. (1) The performance is greatly improved because the steps to break from parabolic segments to line segments are eliminated (This step is the most time consuming process through out the overall process). (2) This approach is not limited to any algorithm developed to break the original curves into parabolas or lines. That is, any newer and better algorithm can be used to speed up the process further without changing the architecture. (3) The implementation of the difference engine can either be software or hardware depending on the design tradeoff based on either performance or cost. (4) The same approach can be used to generate a clipper structure. (5) The clipping of the image can be done efficiently.

The present invention also provides a system for generating graphic images, the system comprising:

a computer terminal for generating an outline which is described in page description language notation, said outline being defined by a list of curves, parabolas or line segments, defined by control points and winding numbers;

means for converting all curves, parabolas and line segments which are defined as control points to initial coordinates and higher order differences to form nodes of a data structure;

means for stepping through said data structure, line by line, by stepping through all active nodes, where an active node is defined as one which intersects the current scan line, the stepping means being operable, for each node, to:

a) recalculate a new set of first and higher order differences and
b) recalculate the next x and y coordinates;

means for generating a bit map using the final set of x and y coordinates and transmitting the bit map to a raster output scanner for printing and display.

In a system in accordance with the invention, fill lines may be generated, based on the coordinates and the winding numbers.

The said outline may also be defined as having a clipper comprising a collection of sets of rectangles, in which case (in addition to recalculating the next x and y coordinates) the system may also be operable to generate rectangles based on the coordinates and winding numbers. The generation of rectangles may comprise the generation of sets of rectangles wherein all rectangles within each set has the same width and x coordinates. Each rectangle may comprise a line connecting points defined by the ends of consecutive lines in x having the same y coordinates.

The present invention further provides a system for generating graphic images, the system comprising:

a computer terminal for generating an outline which is described in page description language notation, said outline being defined by a list of curves, parabolas or line segments, defined by control points and winding numbers, said outline also being defined as having a first clipper comprising a collection of sets of rectangles,;

means for converting all curves, parabolas and line segments which are defined as control points to initial coordinates and higher order differences to form nodes of a data structure;

means for stepping through said data structure, line by line, by stepping through all active nodes, where an active node is defined as one which intersects the current scan line, the stepping means being operable, for each node, to:

a) recalculate a new set of first and higher order differences and

b) recalculate the next x and y coordinates and, for each new scan line, generate image lines where said rectangles overlap the lines between stepper coordinates; and

means for generating a bit map using the final set of x and y coordinates and said image lines and transmitting the bit map to a raster output scanner for printing and display.

The lines generated may be used to fill the outline. The lines generated may be used as the basis for generating a second clipper comprising a collection of sets of rectangles.

By way of example only, processes in accordance with the present invention will be described with reference to the accompanying drawings, in which:

Fig 1 illustrates the steps of a known process used to fill a region bounded by an outline.

Figs 2a and 2b are simplified schematics of the parabolic stepper circuits.

Figs 3a and 3b are simplified schematics of the line stepper circuits.

Fig 4 shows the data structure of one stepper and the node it links to.

Fig 5 shows a sample calculation of the winding number.

Figs 6a and 6b illustrate the creation of stepper #1 for segment #1 in the example.

Figs 7a and 7b illustrate the creation of stepper #2 for segment #2 in the example.

Figs 8a through 15b illustrate the handling of subsequent segments..

Figs 16a through 25b illustrate the process of stepping through the MS-tree.

Fig 26 is an example of a representation of a clipper.

Figs 27 and 28a-e illustrate the data structure for the example clipper shown in Fig 26.

Fig 29 shows examples of clipping regions.

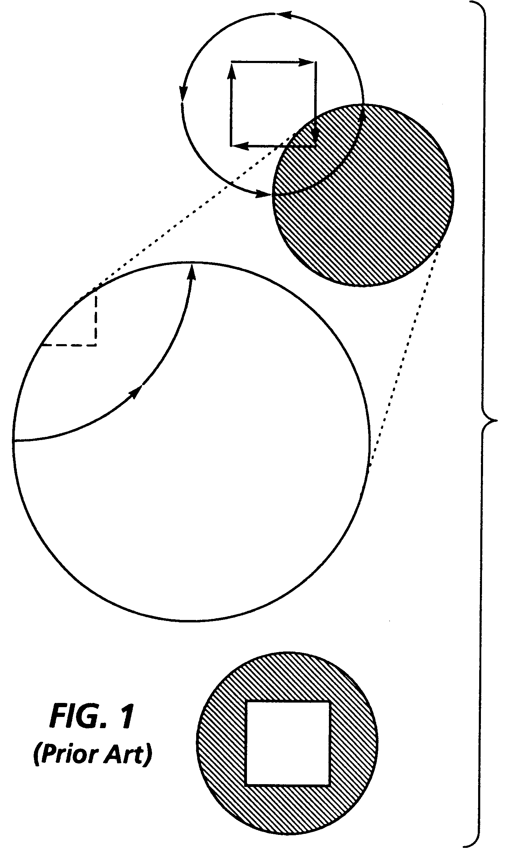

An example of the prior art is shown in Fig. 1. All curves are broken into parabolic segments or lines, and then the area is filled as defined by the outlines and winding number.

A stepper is a piece of hardware or software which is implemented as a difference engine that can calculate and produce the next coordinate of a specific curve at each "step". In this case, each stepper can not only step through a piece of curve (parabola or line) but can also continuously step through a chain of such curves. Steppers will always step from the low X coordinates to the high X coordinates.

At least two steppers are needed to fill an outline. Each stepper represents a boundary stretched from a low x coordinate to a high coordinate. An active stepper is a stepper which has been activated and is currently stepping. It is not necessary that all steppers are active at the same time (i.e., some steppers start later than others, and some steppers finish earlier than others). All the active steppers steps synchronously. That is, each active stepper steps one pixel in the x direction to reach the same new x coordinate and will not step further until all the other active steppers have completed their current step. The filling processor/process reads the y coordinates from all the active steppers at each scanline and fills the scanline accordingly. The active steppers increment their x values at each step and therefore the image is filled line by line from the low x to the high x. In order to improve the filling performance, the steppers are sorted first according to their current x coordinate value and then according to their current Y coordinate value. Before each scanline starts, inactive steppers are checked to see if their starting coordinate matches that of the current x coordinate. If the x coordinate matches then those steppers will be activated (in actual implementation only one comparison is made for each scanline to determine if any stepper needs to be activated). When an active stepper has finish stepping the last segment of its chain, it will be deactivated and destroyed. All the active steppers are sorted according to their y coordinates to improve the performance of the filling process. There are times when outline boundaries may cross each other. This crossing will be detected and the active steppers will be resorted according to their y coordinates. Due to the potentially frequent sorting requirement, the stepper tree is stored as an array of pointers pointing to all the stepper chains of an outline. During the sorting process, only the pointers need to be moved to speed up the process. Special hardware can be used in a hardware implementation to eliminate the need for sorting.

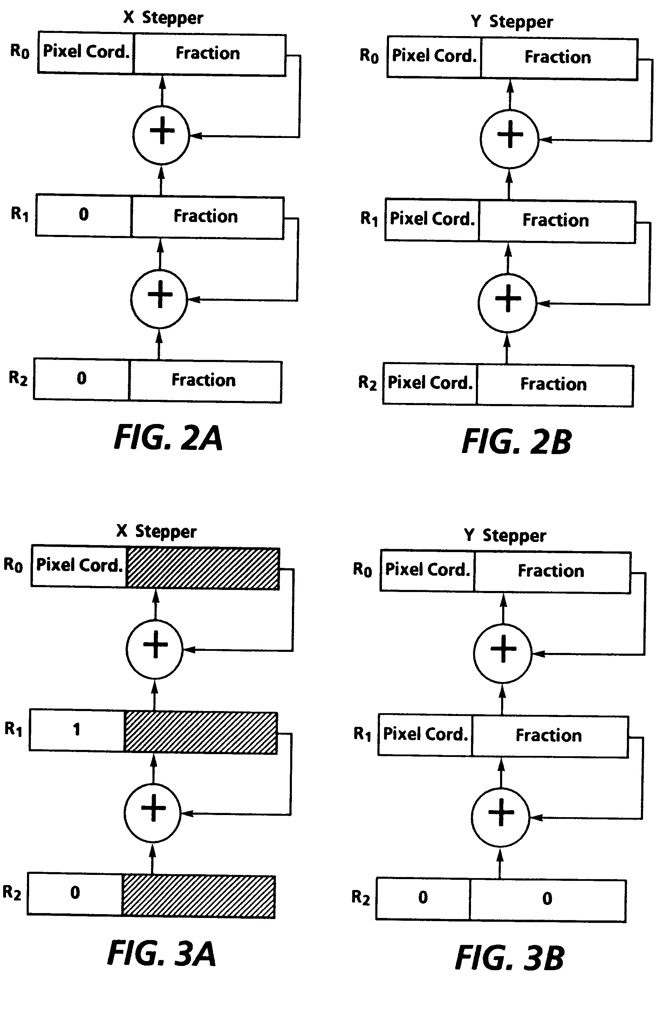

A parabolic stepper is an implementation of the difference engine to trace through the parabolic segment. It consists of a pair (for x and y coordinates) of scaler steppers. Each scaler stepper consists of 3 registers ($R_0$, $R_1$, $R_2$) and 2 adders (see Figs 2a and 2b). The following stepping operations (2 adds for x and 2 adds for y) are performed simultaneously for each cycle and continue until the x coordinates have advanced one pixel position:

$R_0 = R_0 + R_1$;     pixel location of either x or y axis.

$R_1 = R_1 + R_2$;     pixel location changes of either x or y axis. (approximation of first derivative)

$R_2 = C$,     changes of $R_1$ (a constant) (approximation of second derivative)

where $R_0$, $R_1$ and $R_2$ are the starting point, the first order difference and the second order difference, respectively. There will be a third order difference if the original curve is a cubic spline.

The initial conditions for those registers are the initial differences for the parabolic equation and are derived as follows:

The parabola is represented by a parametric equation:

$PAR(t) = P_0(1-t)^2 + 2P_1t(1-t) + P_2t^2$     where $P_0$, $P_1$, $P_2$ are the control points of the parabola.

The process will step each time a small value d along the t axis.

$$R_0 = PAR(0)$$
$$= P_0$$
$$R_1 = PAR(d)-PAR(0)$$
$$= P_0(1-d)^2 + 2P_1d(1-d) + P_2d^2-P_0$$
$$= ((P_2-P_1)-(P_1-P_0))d^2 + 2(P_1-P_0)d$$
$$R_2 = (PAR(2d)-PAR(d))-(PAR(d)-PAR(0))$$
$$= PAR(2d)-2PAR(d) + PAR(0)$$
$$= (P_0(1-2d)^2 + 4P_1d(1-2d) + 4P_2d^2)-2(P_0(1-d)^2 + 2P_1d(1-d) + P_2d^2) + P_0$$
$$= 2((P_2-P_1)-(P_1-P_0))d^2$$

Notice that the absolute value of $R_1$ and $R_2$ must be less than 1 for the x stepper so as not to step more than one pixel for each step cycle. Now, the calculation of d is required. Since the derivative of a parabola (velocity) is a line, the absolute value of the velocity of the parabola will never be larger than the maximum of the absolute values of the two end points of the derivative line. Let the absolute value of the maximum velocity along the x axis be v. Then if d is chosen to be $1/v$, then for each step the x coordinate will never jump across more than one pixel. Better yet, if we choose d to be the greatest number that is less than $1/v$ and can be expressed in the form of $2^{-k}$, the stepper operation would then become a simple integer addition and with no roundoff error if the length of the fraction field of register $R_1$ and $R_2$ of the x stepper is larger than 2k "fraction" bits. $R_0$ needs 2k + r bits where r is the $\log_2$ of the maximum coordinate that the pixel location needs to be addressed. $R_1$ and $R_2$ for the y stepper is not limited to contain an absolute value less than 1.

A line stepper is a special case of the parabola stepper (see Figs 3a and 3b). Since the first derivative of a line is already a constant, the $R_2$ register and the adder for $R_1$ is not necessary (if hardware are available for the stepper the $R_2$ can just be set to zero then the stepper is operating just as a parabola stepper). Some simplifications have been made here to calculate the initial value of the line stepper. First, the x stepper $R_1$ is always set to be 1 pixel (just to advance one pixel in the x direction). Second, the y stepper $R_1$ register is simply the slope of the line represented by a Integer-Fraction pair. If the result is a positive number then the combined word would be added by one in order to ensure the last point of the line terminates at the desired location of the end point $P_1$.

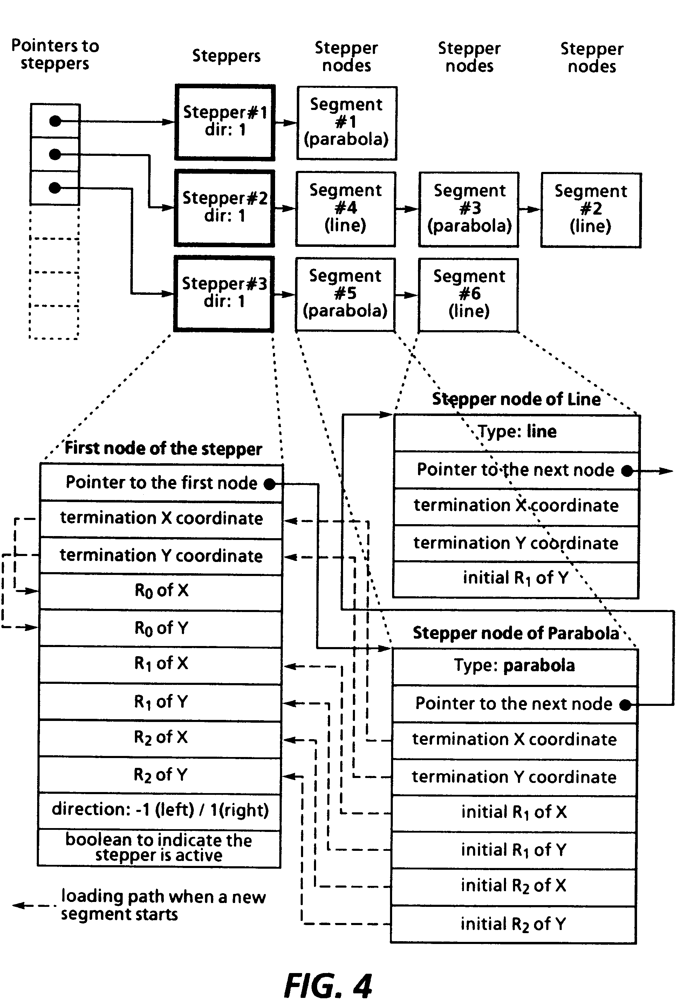

There are as many steppers as there are boundaries for any outline. A boundary is a collection of linked parabolic segments or line segments that traverse only one direction. The stepper we are referring to here includes both its x stepper and its y stepper. Each stepper has a link field which connects to a chain of nodes which contains the initial values and termination criteria for a continuing segment on the boundary. Figure 4 shows the data structure of one stepper and the node it links to (there are two type of nodes, one for a line and one for a parabola).

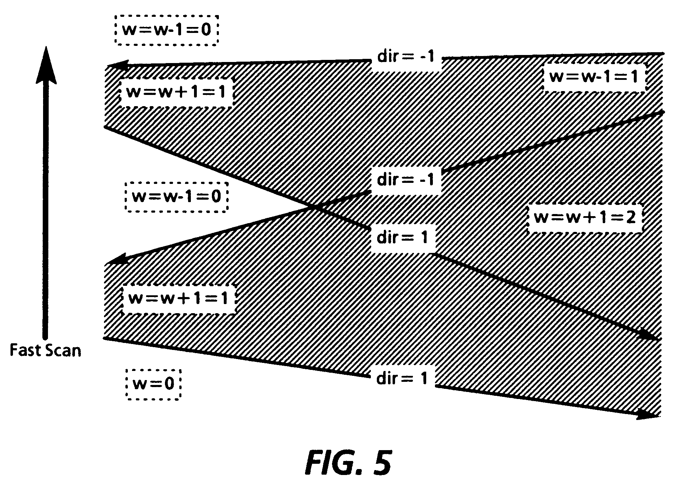

The active steppers will produce the coordinates of interest within each scanline. We then need to determines the "winding number" between each pair of boundaries (see figure 5) and then fill it with some specific color or ink according to the winding number (either non-zero winding number or odd winding number). The winding number "w" is initialized to be 0 when each line starts and is updated by adding the direction number "dir" whenever a boundary is crossed dir = 1 if the boundary goes to the right dir = -1 if the boundary goes to the left.

The following is an example of MS tree creation.

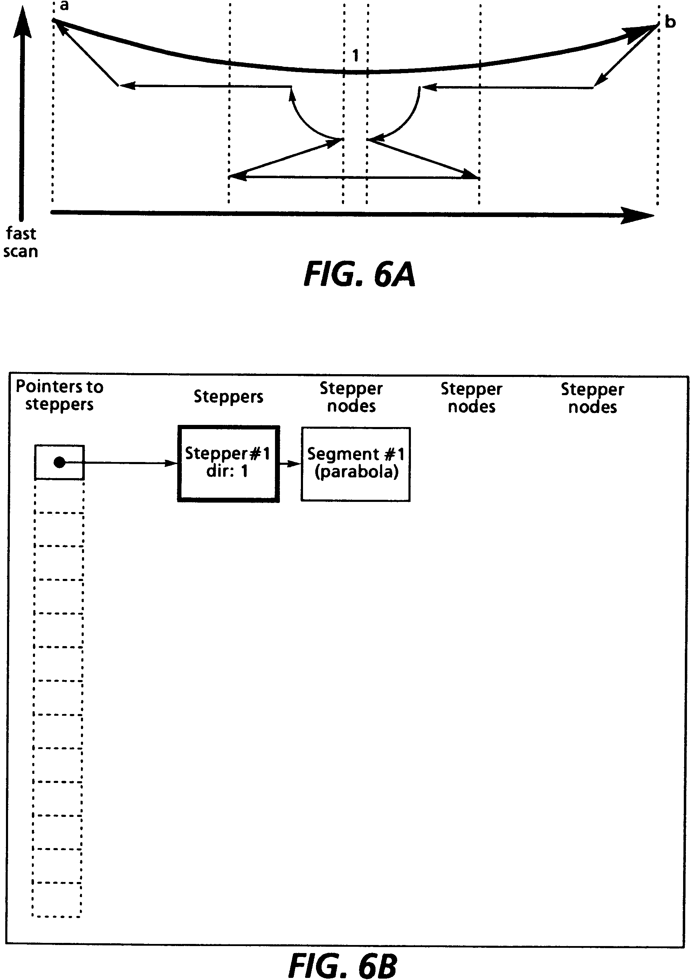

(1) Let point "a" be where the outline starts (in this particular example, there is only one trajectory in the outline). Segment #1 is the first segment on the envelope that ends at point "b" and is traveling to the right. Stepper #1 is thus created (a pointer pointing to this stepper is also stored in the array of pointers) and segment #1 is then linked as the first node of this stepper. Stepper #1 is marked with dir = 1 (to the right). The control points of segment #1 are converted to become stepper parameters and are stored in this node. The stepper termination parameter is also calculated and stored in this node. See Figs 6a and 6b.

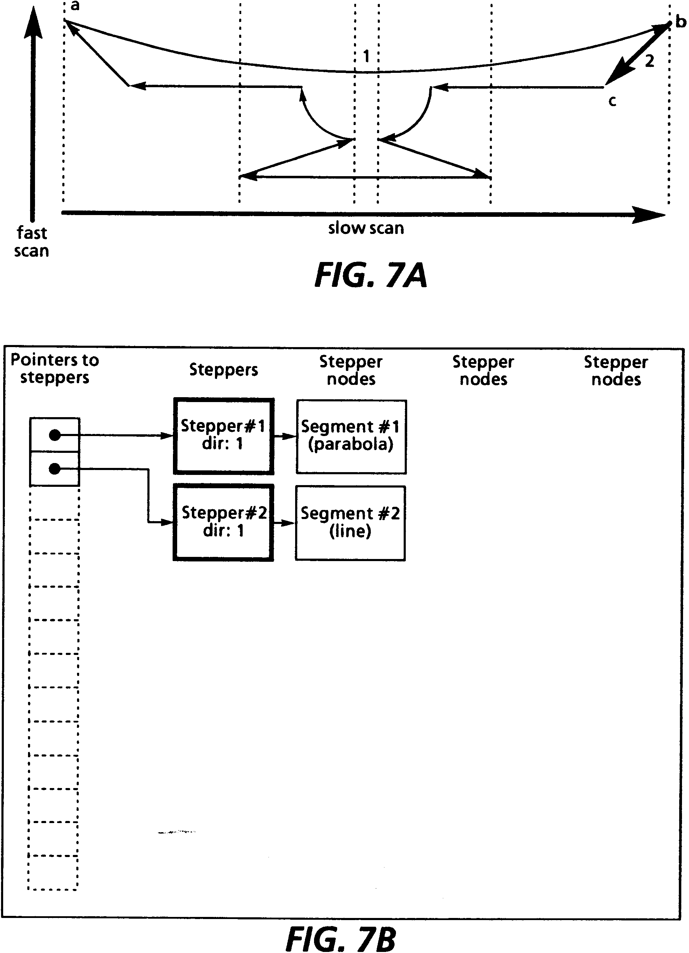

(2) The next segment on the envelope is segment #2. The direction of this segment is changed toward the left. This change of direction is detected, and causes stepper #2 to be created and segment #2 is parameterized to becomes a stepper node and is linked to stepper #2. Stepper #2 is marked with dir = -1 (to the left). See Figs 7a and 7b.

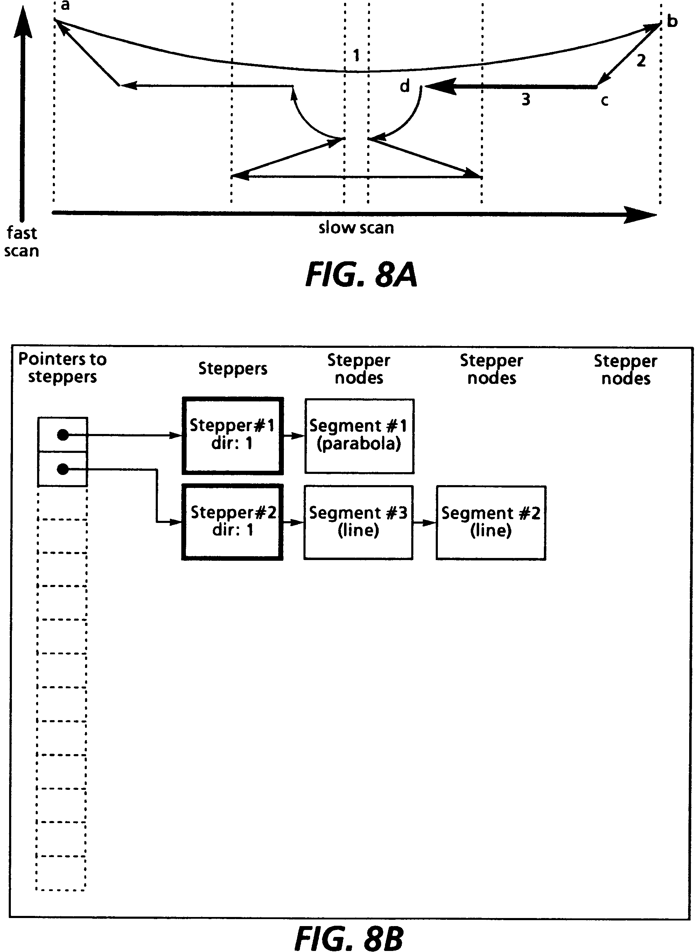

(3) For segment #3, since there is no change in direction, no new stepper is created. Segment #3 is parameterized to becomes a stepper node but is not linked after segment #2. The stepper node for segment #3 is instead inserted in front of the stepper node for segment #2 because we want to maintain that the steppers always step from the left to the right. See Figs 8a and 8b.

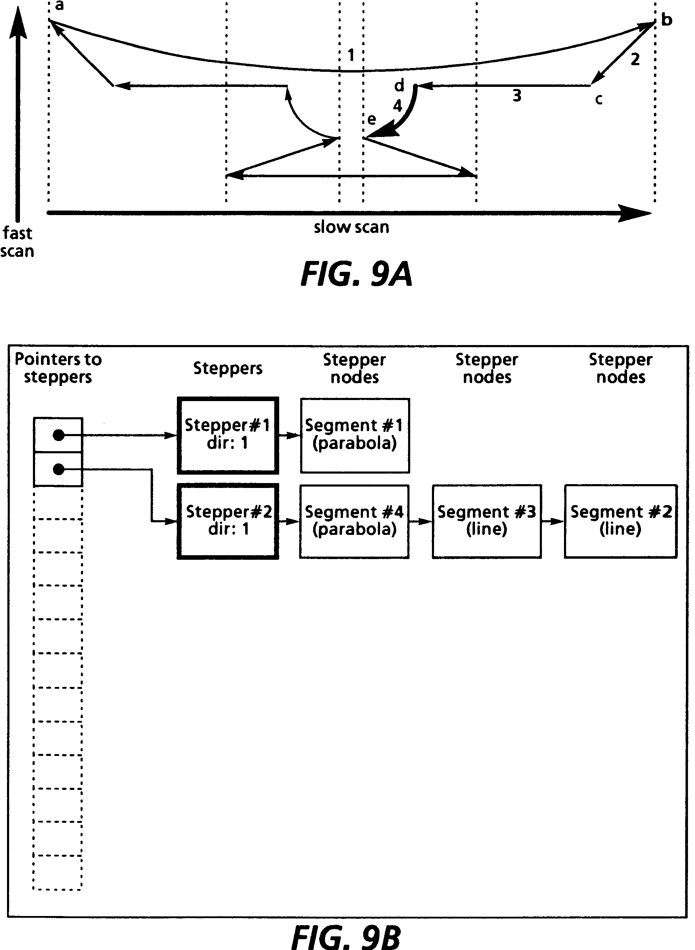

(4) For segment #4, the situation is similar to that as in (3). Therefore the procedure is the same as in (3) with the exception that the stepper node for segment #4 is a parabola stepper node instead of a line stepper node. See Figs 9a and 9b.

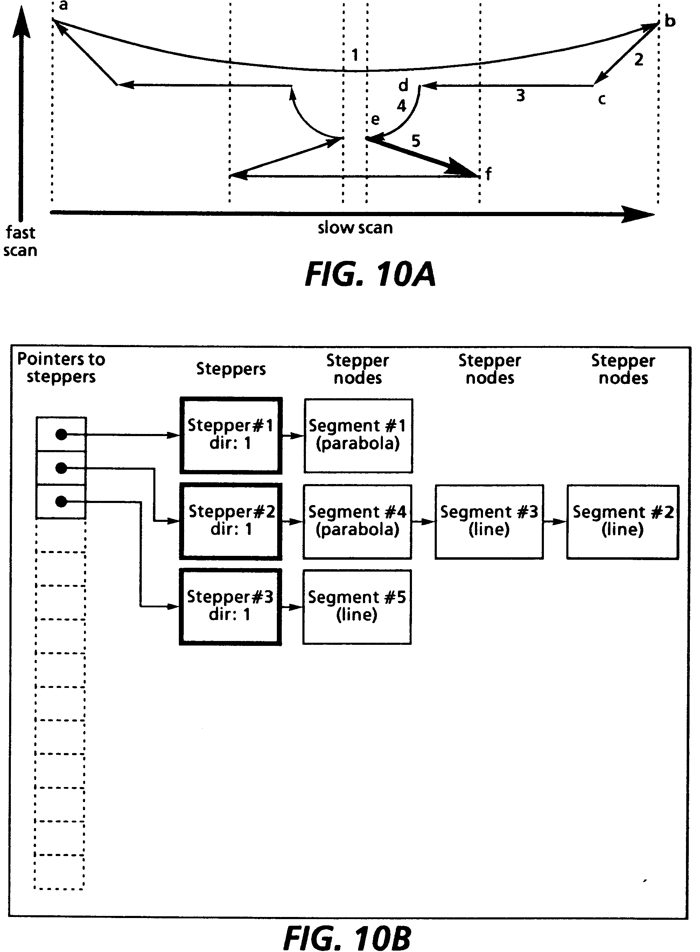

(5) For segment #5, the direction of this segment changes toward the right. This change of direction is detected, and causes stepper #3 to be created and segment #5 is parameterized to becomes a stepper node and is linked to stepper #3. Stepper #3 is marked with dir = 1 (to the right). See Figs 10a and 10b.

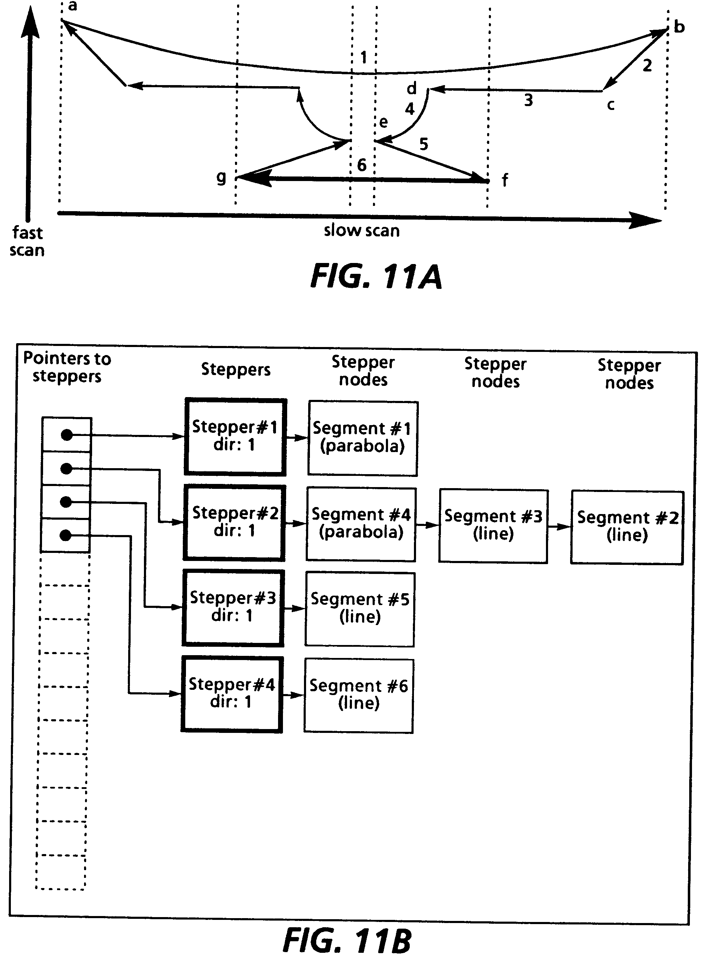

(6) For segment #6, the direction of this segment changes toward the left. This change of direction is detected, and causes stepper #4 to be created and segment #6 is parameterized to becomes a stepper node and is linked to stepper #4. Stepper #4 is marked with dir = -1 (to the left). See Figs 11a and 11b.

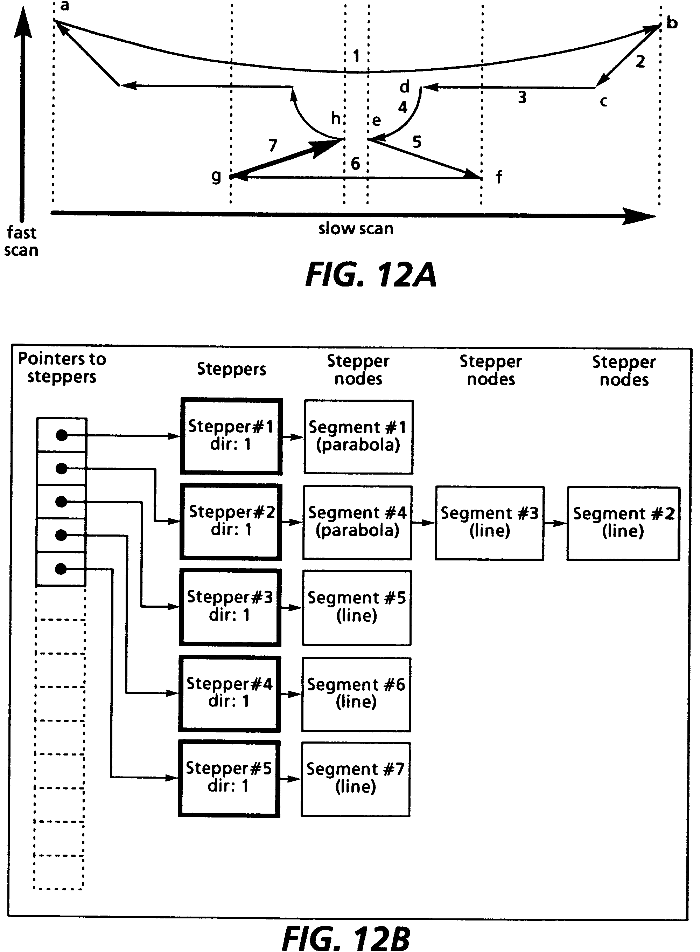

(7) For segment #7, the direction of this segment changes toward the right. This change of direction is detected, and causes stepper #5 to be created and segment #7 is parameterized to becomes a stepper node and is linked to stepper #5. Stepper #5 is marked with dir = 1 (to the right). See Figs 12a and 12b.

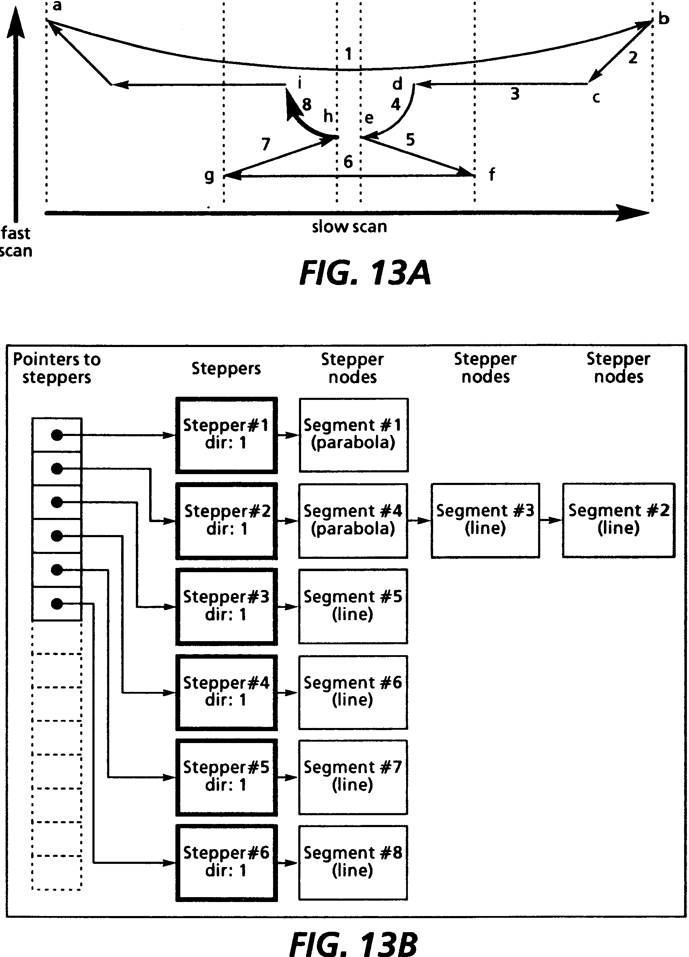

(8) For segment #8, the direction of this segment changes toward the left. This change of direction is detected, and causes stepper #6 to be created and segment #8 is parameterized to becomes a stepper node and is linked to stepper #6. Stepper #6 is marked with dir = -1 (to the left). See Figs 13a and 13b.

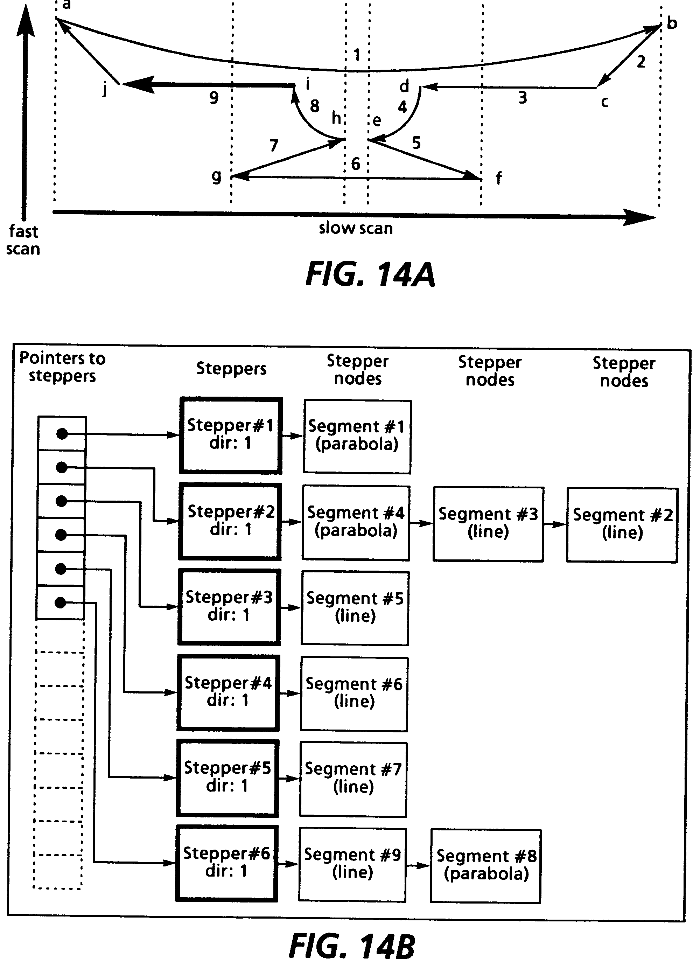

(9) For segment #9, since there is no direction change, no new stepper is created. Segment #9 is parameterized to becomes a stepper node but is not linked after Segment #8. The stepper node for segment #9 is instead inserted in front of the stepper node for segment #8 because we want to maintain that the steppers always step from the left to the right. See Figs 14a and 14b.

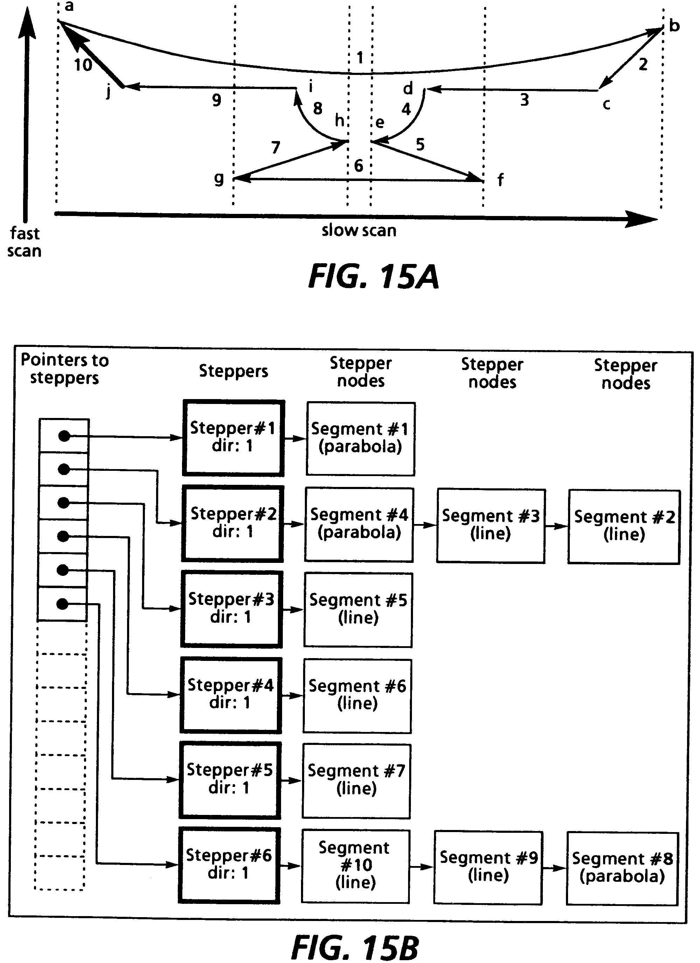

(10 For segment #10, the situation is similar to that as in (9). Therefore the procedure is the same as in (9). See Figs 15a and 15b.

(11) At this point we find that segment #10 has returned back to the starting point "a". We then check to see if the direction of the last stepper (stepper #6) is the same as the direction of the first stepper (stepper #1). In this example the direction is different, which means we have completed the process. In the case in which the direction is the same, which means stepper #1 should be the same as stepper #6, we should merge the two stepper chains with the list of the first stepper ahead of the list of the last stepper since the direction of the combined chain is going to the left.

The process of stepping through the MS-tree is as follows:

(1) The first step is to load all the steppers with the information stored in their first node.

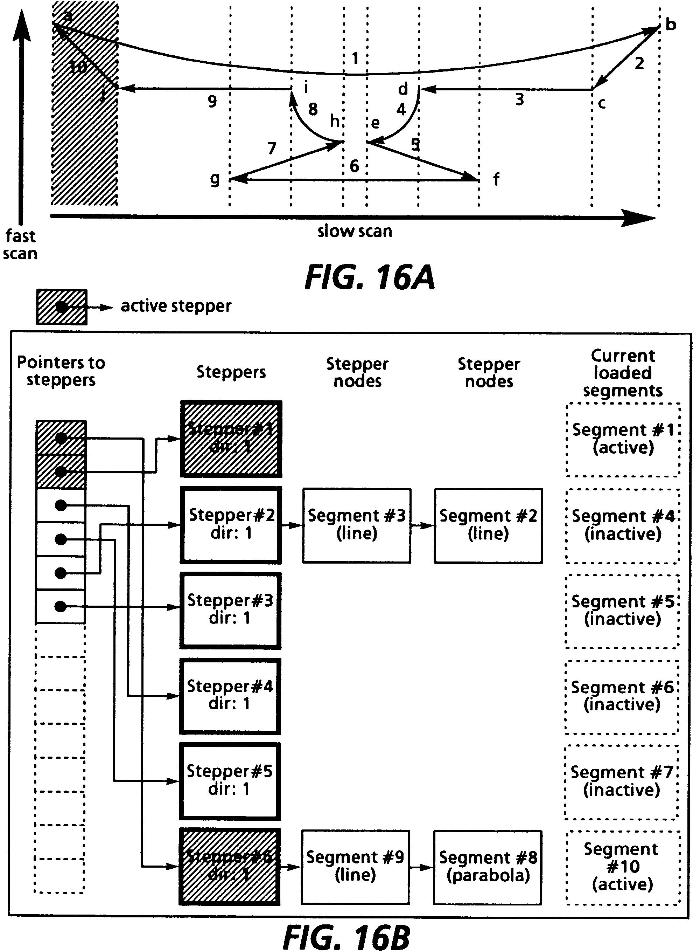

(2) The steppers are first sorted according to their x coordinates. Those steppers with the lowest x coordinates are the active steppers (indicated in Figs 16a through 25b as the shaded area).

(3) All the active steppers will be sorted according to their y coordinates.

(4) Advance all the active steppers one pixel in the x direction (may take more than one cycle for each stepper).

(5) Check to see if the resultant Y coordinates are in order (i.e., check boundary crossing). If boundary crossing occurs then resort the active steppers according to their Y coordinates.

(6) If any stepper has reach its termination condition (a segment of the boundary is completed), then load the parameters from the next node (Figs 16a through 25b show the stepper nodes that have been loaded into the corresponding steppers by a box of dotted lines). If there is no further node linked to this stepper then destroy the stepper (the boundary is completed).

(7) If the current x coordinate matches the initial coordinate of any of those non-active steppers, then activate those steppers and go back to step (2), else go back to step (4). If all steppers are destroyed then we are done.

Let us use the example shown in Figs 16a through 25b to explain the operations:

(1) Figs 16a and 16b show the steppers configuration after they are loaded and sorted with the parameters of their first node (those nodes are discarded after they were loaded). There is a total of six steppers and two of them are active. Figs 16a and 16b also show the state while stepping the area between point "a" and point "j". Notice that after the sorting, stepper #6 is ahead of stepper #1 because the fast scan direction is from bottom to top.

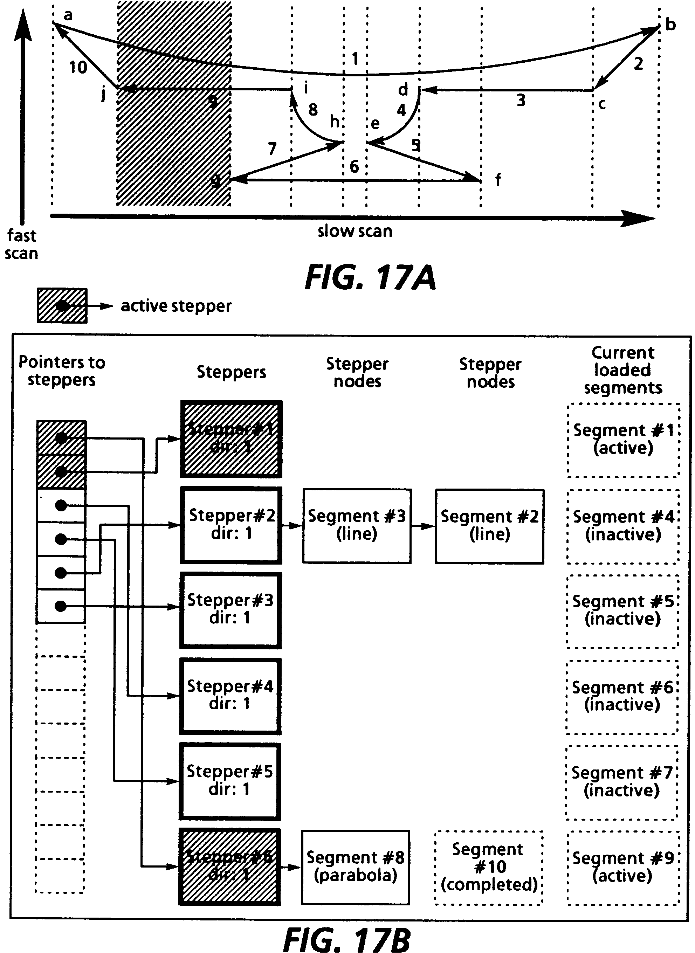

(2) After we step pass point "j", segment #10 is completed and segment #9 is loaded into stepper #6. See Figs 17a and 17b.

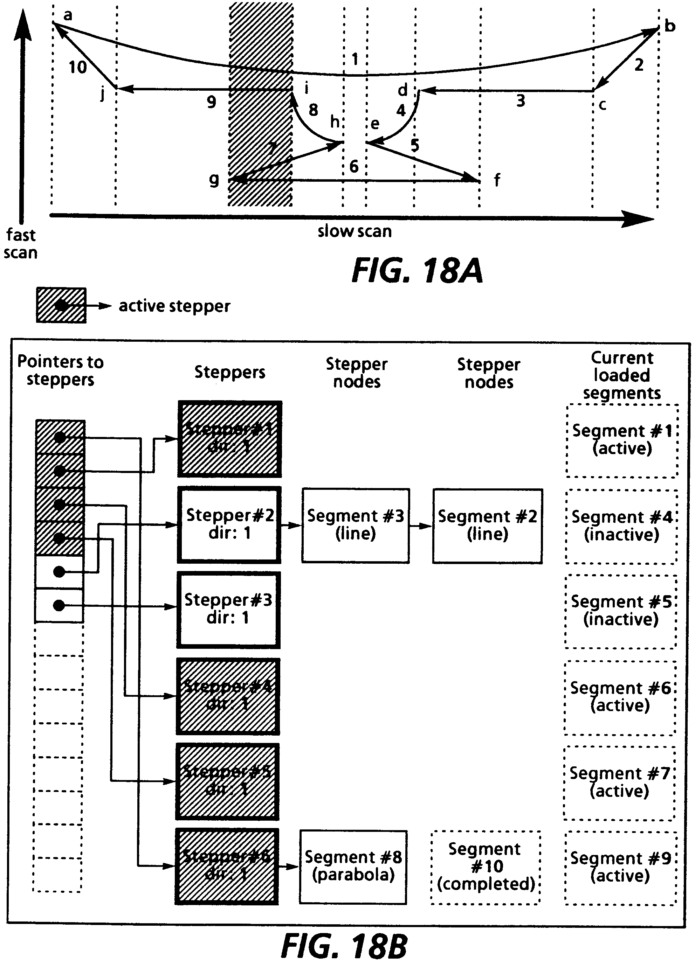

(3) After we step pass point "g", two more steppers are activated. Stepper #4 starts to step along segment #6 and stepper #5 starts to step along segment #7. Stepper #1 and stepper #6 just continue stepping. Notice that the steppers are sorted with the order of #4, #5, #6, and #1 according to their position on the y axis. See Figs 18a and 18b.

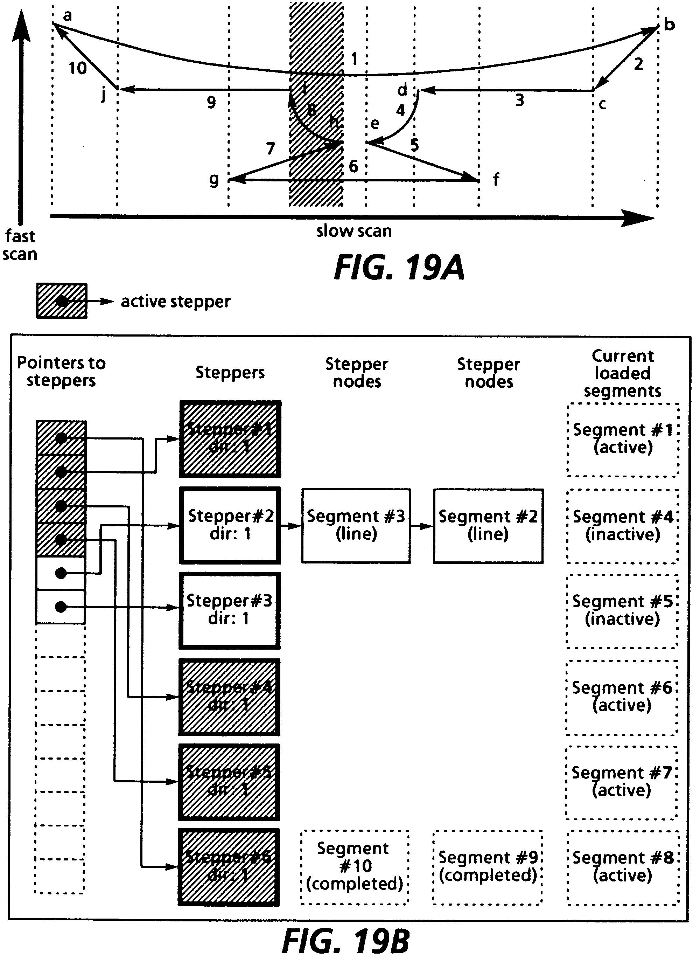

(4) After we step pass point "i", segment #9 is completed and segment #8 is loaded into stepper #6. See Figs 19a and 19b.

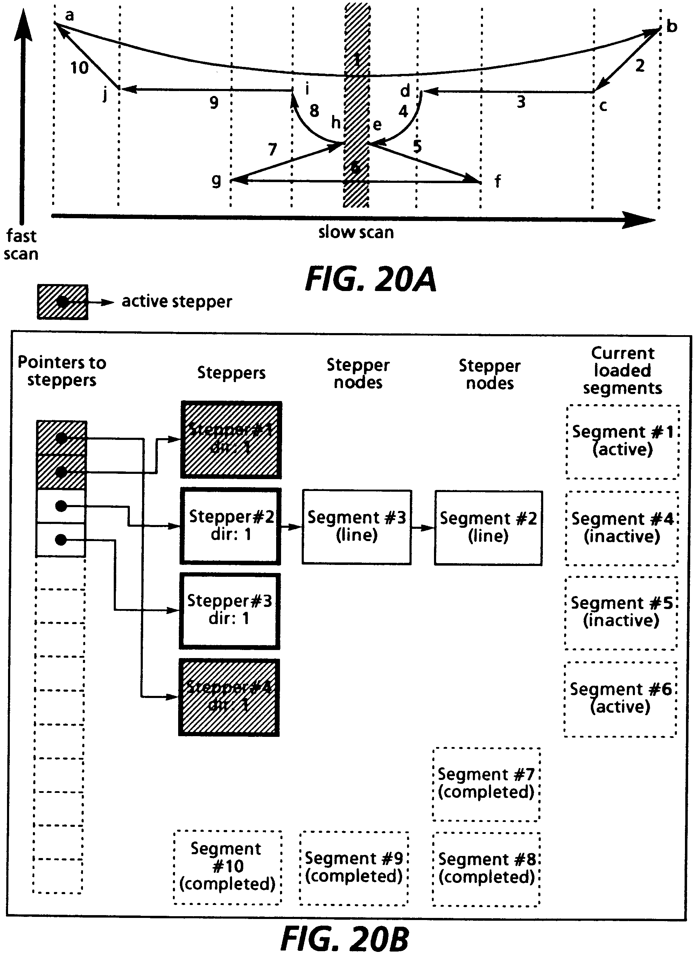

(5) After we step pass point "h", stepper #5 has completed stepping of segment #7 and stepper #6 has completed stepping of segment #8. Both steppers have exhausted their stepper nodes and therefore are terminated and destroyed. See Figs 20a and 20b.

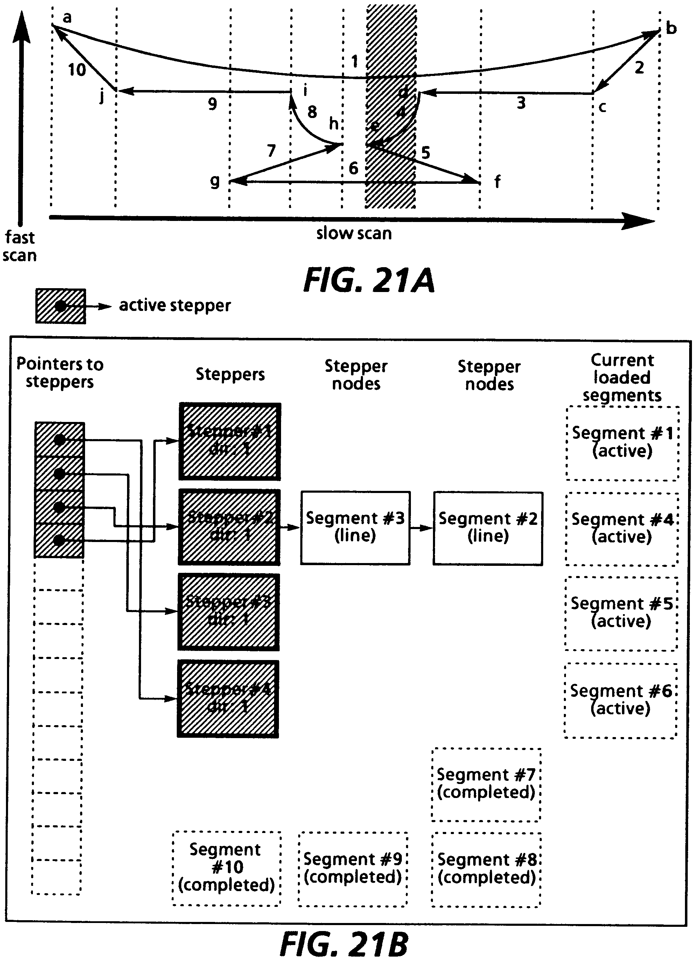

(6) After we step pass point "e", two more steppers are activated. Stepper #2 starts to step along segment #4 and stepper #3 starts to step along segment #5. Stepper #1 and stepper #4 continue stepping. Notice that the steppers are sorted with the order of #4, #3, #2, and #1 according to their position on the y axis. See Figs 21 a and 21 b.

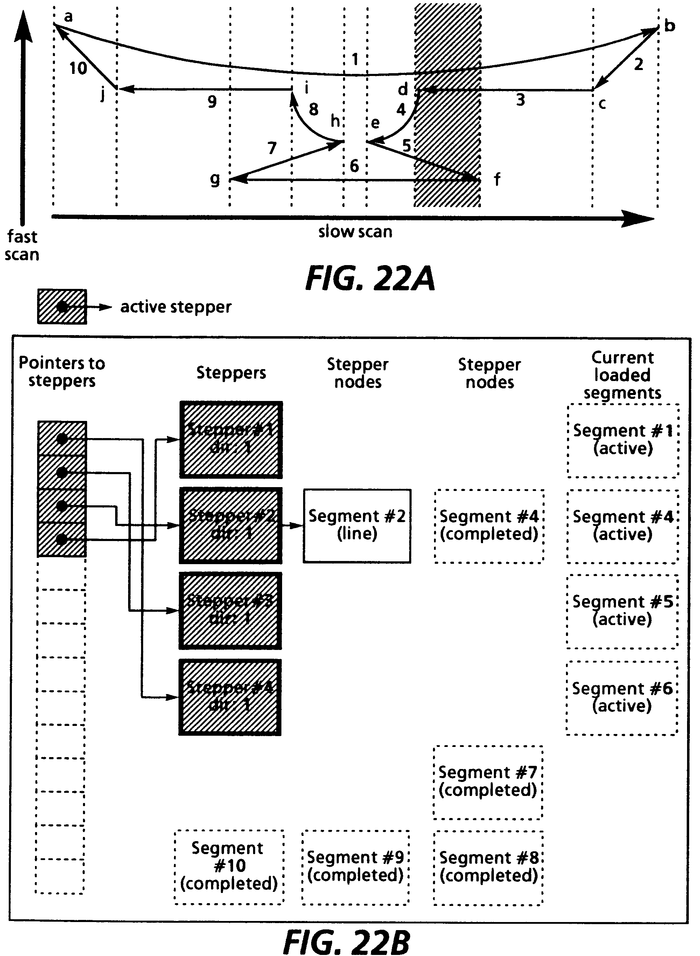

(7) After we step pass point "d", segment #4 is completed and segment #3 is loaded into stepper #2. See Figs 22a and 22b.

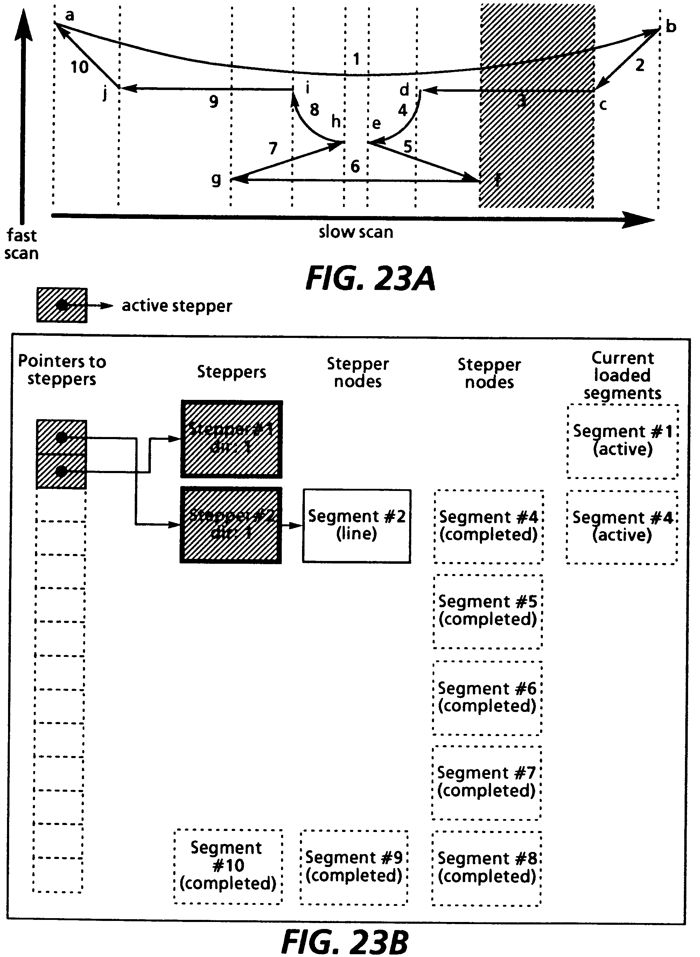

(8) After we step pass point "f", stepper #3 has completed the stepping of segment #5 and stepper #4 has completed the stepping of segment #6. Both steppers have exhausted their stepper nodes and therefore they are terminated and destroyed. See Figs 23a and 23b.

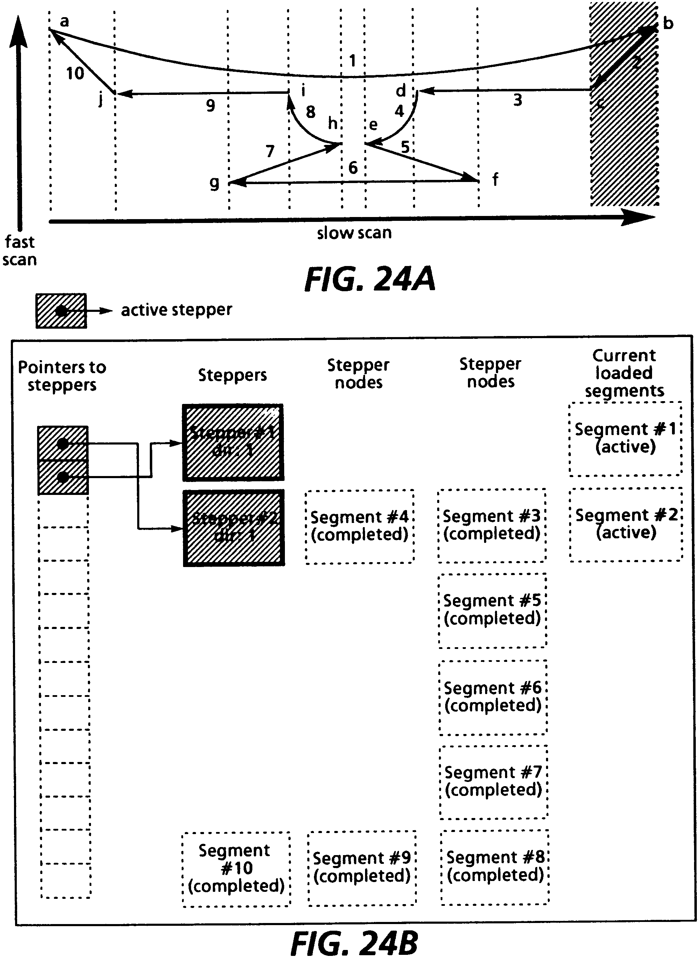

(9) After we step pass point "c", segment #3 is completed and segment #2 is loaded into stepper #2. See Figs 24a and 24b.

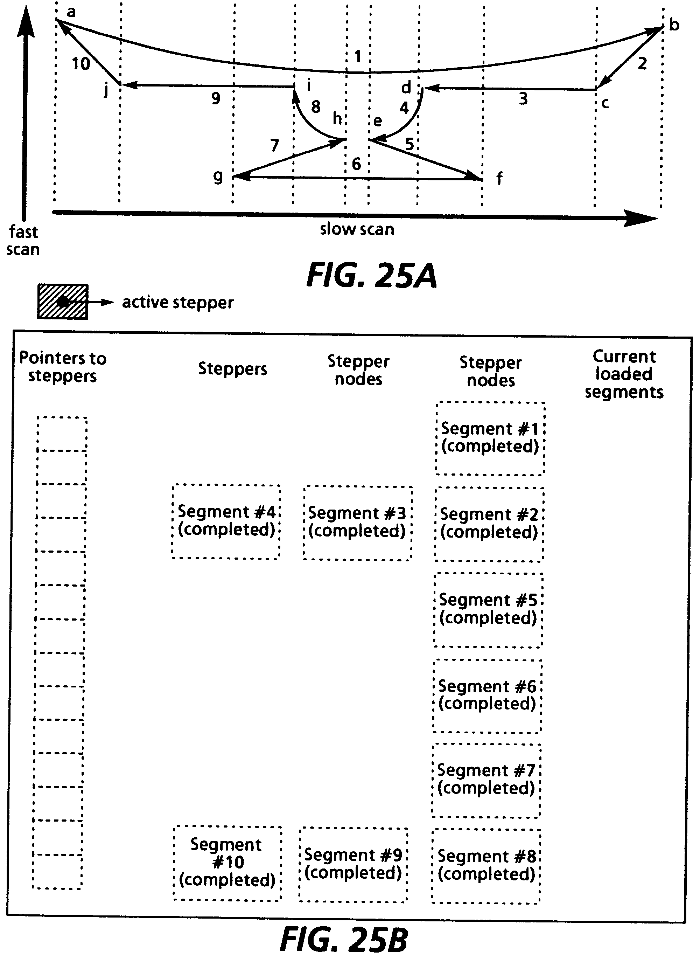

(10) After we step pass point "d", all steppers are destroyed and we are done. See Figs 25a and 25b.

This process can be used in conjunction, and in parallel, with a clipping function. As an introduction, assume that there initially exists a rectangular clipper with the same dimension as the printing medium for each page body. Each time the clipping operator is invoked, a new clipper is created with the clipping region being the intersection of the underlying old clipping region with the new clipping region defined by an outline, see Fig 29.

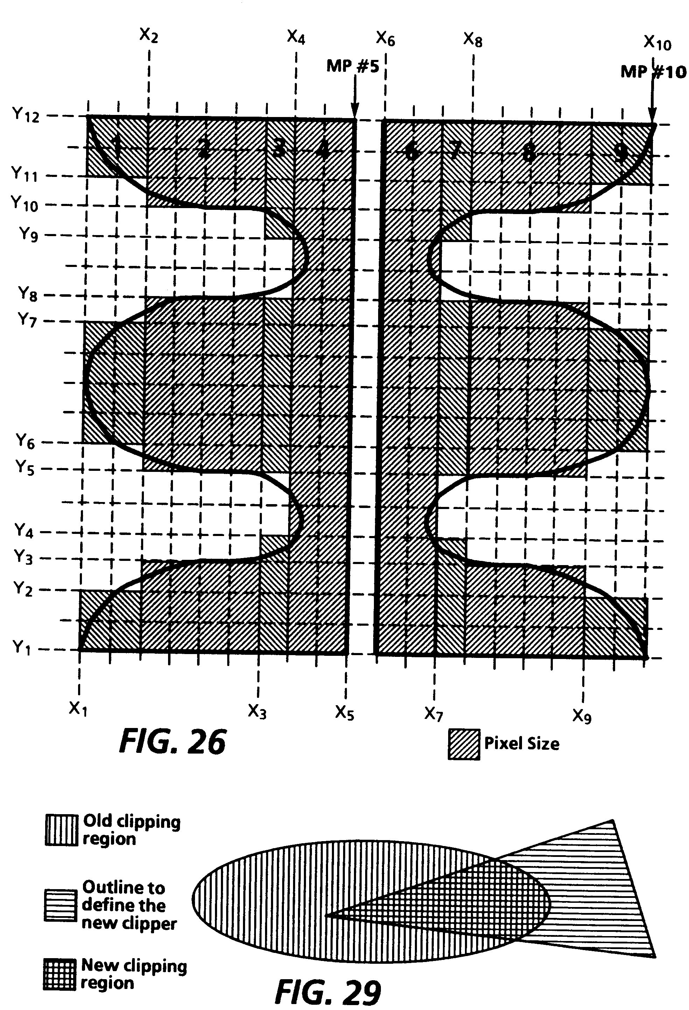

The clipper is represented as a collection of sets of rectangles, each set referred to as an "MP". Each MP is defined to be a collection of non-overlapping rectangles with the same bounding x coordinates. The initial clipper for each page body is a clipper which consists of a single MP comprising a single rectangle. See Fig 26 for an example of the clipper representation.

In terms of the clipper data structure, a clipper is represented as a pointer which points to a clipper header node. It is so represented so that the clipper can be easily handled as an Interpress object (e.g., Trajectory, Outline, etc.). In the clipper field there are 3 subfields: 1) a tag field which identifies this header node to be a clipper header node; 2) an mp_cnt field which represents the number of MPs within this clipper; and 3) an array of pointers that point to a collection of MPs.

Each MP is stored in a data structure with 3 fields: 1) a start_x field which stores the starting x coordinate of each MP (the ending x coordinate of each polygon is stored in the start_x field of the next MP in the MP array within the clipper header note); 2) a run_cnt field which represents the number of runs/rectangles in each polygon, and 3) as array of runs (each run here refers to a vertical scanline start/end at some specific y coordinate). A clipper could consist of multiple clipping regions. The last MP of each of the clipping regions is an MP with its own run cnt field set to zero. The start x field of the last MP of each clipping region is the x coordinate of that clipping region right boundary.

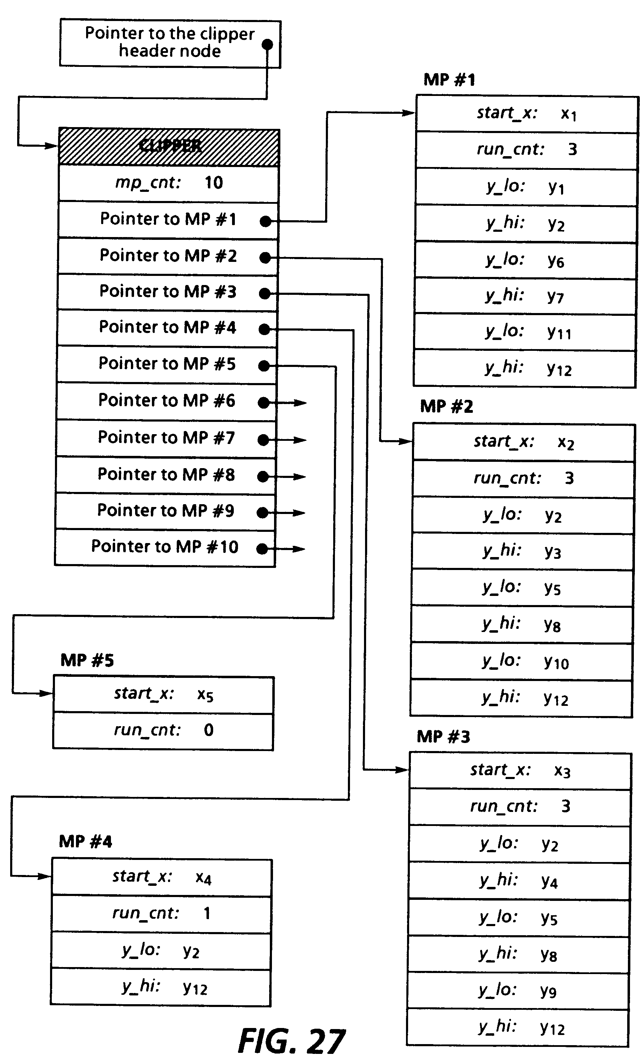

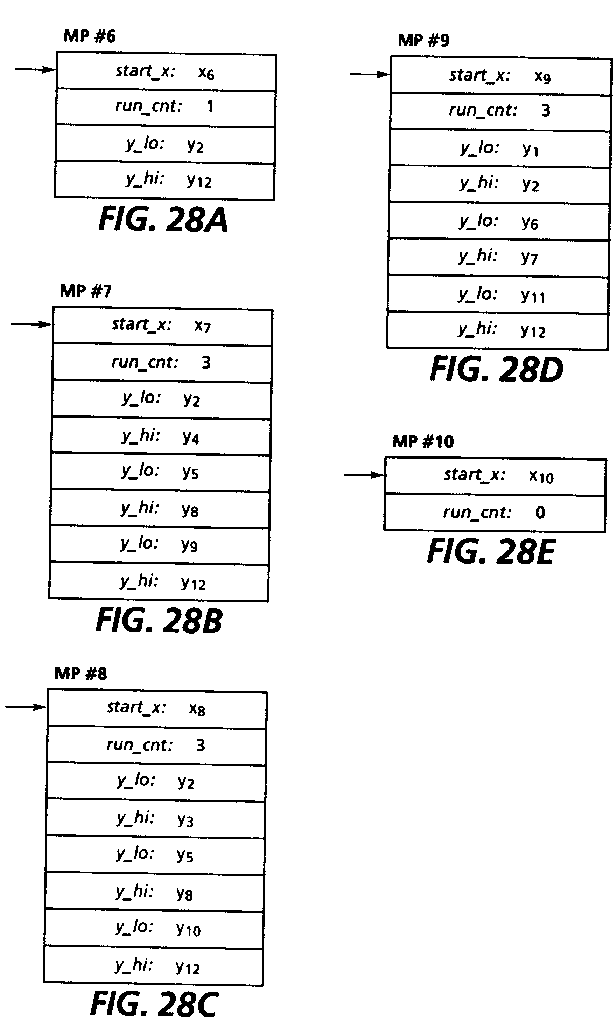

Each run is stored in a data structure with 2 fields: 1) a y_lo field which stores the starting y coordinate of a run, 2) a y_hi field which stores the ending y coordinate of a run. Figs 27 and Figs 28a-e illustrate the data structure of an example of the clipper shown in Fig 26.

## Claims

1. A process for generating graphic images, including converting an outline defined by a list of curves, parabolas or line segments, defined by control points and winding numbers, into a collection of x and y coordinates, the process comprising the steps of:

converting all curves, parabolas and line segments which are defined as control points to initial coordinates and higher order differences to form nodes of a data structure, and

stepping through said data structure, line by line, by stepping through all active nodes, where an active node is defined as one which intersects the current scan line, for each node the process comprising:
a) recalculating a new set of first and higher order differences and,
b) recalculating the next x and y coordinates.

2. A process for generating graphic images, comprising the steps of:

using a computer terminal to generate an outline which is described in page description language notation, said outline being defined by a list of curves, parabolas or line segments defined by control points and winding numbers,

converting all curves, parabolas and line segments which are defined as control points to initial coordinates and higher order differences to form nodes of a data structure,

stepping through said data structure, line by line, by stepping through all active nodes, where an active node is defined as one which intersects the current scan line, for each node the process comprising:

a) recalculating a new set of first and higher order differences, and

b) recalculating the next x and y coordinates, using the final set of x and y coordinates to generate a bit map, and transmitting said bit map to raster output scanner for printing or display

3. A process for generating graphic images, including filling an outline defined by a list of curves, parabolas or line segments, defined by control points and winding numbers, comprising the steps of:

using the process of Claim 1 or Claim 2 to generate a collection of x and y coordinates, and

generating fill lines based on the coordinates and the winding numbers.

4. A process for generating graphic images, including generating a clipper comprising a collection of sets of rectangles from an outline defined by a list of curves, parabolas or line segments, defined by control points and winding numbers, comprising the steps of:

using the process of Claim 1 or Claim 2 to generate a collection of x and y coordinates, and

generating rectangles based on the coordinates and winding numbers.

5. A process as claimed in Claim 4, wherein said generation of rectangles comprises the generation of sets of rectangles wherein all rectangles within each set has the same width and x coordinates.

6. A process as claimed in Claim 4, wherein each rectangle comprises a line connecting points defined by the ends of consecutive lines in x having the same y coordinates.

7. A process for generating graphic images, including generating lines from an outline defined by a list of curves, parabolas or line segments, defined by control points and winding numbers, and a first clipper comprising a collection of sets of rectangles, the process comprising the steps of:

converting all curves, parabolas and line segments which are defined as control points to initial coordinates and higher order differences to form nodes of a data structure,

stepping through said data structure, line by line, by stepping through all active nodes, where an active node is defined as one which intersects the current scan line, for each node the process comprising:

a) recalculating a new set of first and higher order differences and,

b) recalculating the next x and y coordinates, and for each new scan line, generating lines where said rectangles overlap the lines between stepper coordinates.

8. A process for generating graphic images, comprising the steps of:

using a computer terminal to generate an outline which is described in page description language notation, said outline being defined by a list of curves, parabolas or line segments defined by control points and winding numbers, said outline also being defined as having a first clipper comprising a collection of sets of rectangles,

converting all curves, parabolas and line segments which are defined as control points to initial coordinates and higher order differences to form nodes of a data structure,

stepping through said data structure, line by line, by stepping through all active nodes, where an active node is defined as one which intersects the current scan line, for each node the process comprising:

a) recalculating a new set of first and higher order differences, and

b) recalculating the next x and y coordinates, and for each new scan line, generating image lines where said rectangles overlap the lines between stepper coordinates,

using the final set of x and y coordinates and said image lines to generate a bit map,k and

transmitting said bit map to a raster output scanner for printing or display.

9. A process as claimed in Claim 7 or Claim 8, wherein the lines generated are used to fill the outline.

10. A process as claimed in Claim 7 or Claim 8, wherein the lines generated are used as the basis for generating a second clipper comprising a collection of sets of rectangles.

**FIG. 1**
*(Prior Art)*

## X Stepper

R₀ | Pixel Cord. | Fraction

R₁ | 0 | Fraction

R₂ | 0 | Fraction

**FIG. 2A**

## Y Stepper

R₀ | Pixel Cord. | Fraction

R₁ | Pixel Cord. | Fraction

R₂ | Pixel Cord. | Fraction

**FIG. 2B**

## X Stepper

R₀ | Pixel Cord.

R₁ | 1

R₂ | 0

**FIG. 3A**

## Y Stepper

R₀ | Pixel Cord. | Fraction

R₁ | Pixel Cord. | Fraction

R₂ | 0 | 0

**FIG. 3B**

# FIG. 4

**Pointers to steppers** | **Steppers** | **Stepper nodes** | **Stepper nodes** | **Stepper nodes**

| Stepper #1 dir: 1 | → | Segment #1 (parabola) |

| Stepper #2 dir: 1 | → | Segment #4 (line) | → | Segment #3 (parabola) | → | Segment #2 (line) |

| Stepper #3 dir: 1 | → | Segment #5 (parabola) | → | Segment #6 (line) |

**First node of the stepper**

| Pointer to the first node ● |
| termination X coordinate |
| termination Y coordinate |
| $R_0$ of X |
| $R_0$ of Y |
| $R_1$ of X |
| $R_1$ of Y |
| $R_2$ of X |
| $R_2$ of Y |
| direction: -1 (left) / 1(right) |
| boolean to indicate the stepper is active |

**Stepper node of Line**

| Type: line |
| Pointer to the next node ● |
| termination X coordinate |
| termination Y coordinate |
| initial $R_1$ of Y |

**Stepper node of Parabola**

| Type: parabola |
| Pointer to the next node ● |
| termination X coordinate |
| termination Y coordinate |
| initial $R_1$ of X |
| initial $R_1$ of Y |
| initial $R_2$ of X |
| initial $R_2$ of Y |

←－－ loading path when a new segment starts

**FIG. 5**

**FIG. 6A**

fast
scan

| Pointers to steppers | Steppers | Stepper nodes | Stepper nodes | Stepper nodes |
|---|---|---|---|---|
| ● | Stepper #1 dir: 1 | Segment #1 (parabola) | | |

**FIG. 6B**

**FIG. 7A**

**FIG. 7B**

**FIG. 8A**

**FIG. 8B**

**FIG. 9A**

**FIG. 9B**

**FIG. 10A**

**FIG. 10B**

**FIG. 11A**

**FIG. 11B**

## FIG. 12A

## FIG. 12B

**FIG. 13A**

**FIG. 13B**

## FIG. 14A

## FIG. 14B

**FIG. 15A**

**FIG. 15B**

## FIG. 16A

## FIG. 16B

## FIG. 17A

## FIG. 17B

**FIG. 18A**

active stepper

**FIG. 18B**

## FIG. 19A

fast
scan

slow scan

active stepper

## FIG. 19B

Pointers to steppers

Steppers

Stepper nodes

Stepper nodes

Current loaded segments

Stepper#1 dir: 1

Segment #1 (active)

Stepper#2 dir: 1

Segment #3 (line)

Segment #2 (line)

Segment #4 (inactive)

Stepper#3 dir: 1

Segment #5 (inactive)

Stepper#4 dir: 1

Segment #6 (active)

Stepper#5 dir: 1

Segment #7 (active)

Stepper#6 dir: 1

Segment #10 (completed)

Segment #9 (completed)

Segment #8 (active)

**FIG. 20A**

**FIG. 20B**

**FIG. 21A**

**FIG. 21B**

**FIG. 22A**

**FIG. 22B**

**FIG. 23A**

**FIG. 23B**

29

**FIG. 24A**

active stepper

**FIG. 24B**

EP 0 479 496 A2

**FIG. 25A**

**FIG. 25B**

31

**FIG. 26**

Pixel Size

Old clipping region

Outline to define the new clipper

New clipping region

**FIG. 29**

Pointer to the clipper header node

**MP #1**

| | |
|---|---|
| *start_x:* | $x_1$ |
| *run_cnt:* | 3 |
| *y_lo:* | $y_1$ |
| *y_hi:* | $y_2$ |
| *y_lo:* | $y_6$ |
| *y_hi:* | $y_7$ |
| *y_lo:* | $y_{11}$ |
| *y_hi:* | $y_{12}$ |

| CLIPPER |
|---|
| *mp_cnt:* 10 |
| Pointer to MP #1 |
| Pointer to MP #2 |
| Pointer to MP #3 |
| Pointer to MP #4 |
| Pointer to MP #5 |
| Pointer to MP #6 |
| Pointer to MP #7 |
| Pointer to MP #8 |
| Pointer to MP #9 |
| Pointer to MP #10 |

**MP #2**

| | |
|---|---|
| *start_x:* | $x_2$ |
| *run_cnt:* | 3 |
| *y_lo:* | $y_2$ |
| *y_hi:* | $y_3$ |
| *y_lo:* | $y_5$ |
| *y_hi:* | $y_8$ |
| *y_lo:* | $y_{10}$ |
| *y_hi:* | $y_{12}$ |

**MP #5**

| | |
|---|---|
| *start_x:* | $x_5$ |
| *run_cnt:* | 0 |

**MP #3**

| | |
|---|---|
| *start_x:* | $x_3$ |
| *run_cnt:* | 3 |
| *y_lo:* | $y_2$ |
| *y_hi:* | $y_4$ |
| *y_lo:* | $y_5$ |
| *y_hi:* | $y_8$ |
| *y_lo:* | $y_9$ |
| *y_hi:* | $y_{12}$ |

**MP #4**

| | |
|---|---|
| *start_x:* | $x_4$ |
| *run_cnt:* | 1 |
| *y_lo:* | $y_2$ |
| *y_hi:* | $y_{12}$ |

*FIG. 27*

**MP #6**

| | |
|---|---|
| start_x: | $x_6$ |
| run_cnt: | 1 |
| y_lo: | $y_2$ |
| y_hi: | $y_{12}$ |

**FIG. 28A**

**MP #7**

| | |
|---|---|
| start_x: | $x_7$ |
| run_cnt: | 3 |
| y_lo: | $y_2$ |
| y_hi: | $y_4$ |
| y_lo: | $y_5$ |
| y_hi: | $y_8$ |
| y_lo: | $y_9$ |
| y_hi: | $y_{12}$ |

**FIG. 28B**

**MP #8**

| | |
|---|---|
| start_x: | $x_8$ |
| run_cnt: | 3 |
| y_lo: | $y_2$ |
| y_hi: | $y_3$ |
| y_lo: | $y_5$ |
| y_hi: | $y_8$ |
| y_lo: | $y_{10}$ |
| y_hi: | $y_{12}$ |

**FIG. 28C**

**MP #9**

| | |
|---|---|
| start_x: | $x_9$ |
| run_cnt: | 3 |
| y_lo: | $y_1$ |
| y_hi: | $y_2$ |
| y_lo: | $y_6$ |
| y_hi: | $y_7$ |
| y_lo: | $y_{11}$ |
| y_hi: | $y_{12}$ |

**FIG. 28D**

**MP #10**

| | |
|---|---|
| start_x: | $x_{10}$ |
| run_cnt: | 0 |

**FIG. 28E**